Europäisches Patentamt

European Patent Office

Office européen des brevets

(19)

(11) **EP 0 667 233 B1**

(12) **FASCICULE DE BREVET EUROPEEN**

(45) Date de publication et mention
de la délivrance du brevet:
**07.06.2000 Bulletin 2000/23**

(51) Int Cl.$^7$: **B32B 7/06**, F16B 43/00,
F16F 3/00

(21) Numéro de dépôt: **95400294.5**

(22) Date de dépôt: **13.02.1995**

(54) **Produit composite laminé pelable et son application à la fabrication de cales de réglage**

Abziehbarer Verbundstoff und seiner Verwendung bei der Herstellung von Ausgleichsscheiben

Peelable laminate and its application in the manufacture of shims

(84) Etats contractants désignés:
**DE ES GB IT**

(30) Priorité: **14.02.1994 FR 9401653**

(43) Date de publication de la demande:
**16.08.1995 Bulletin 1995/33**

(73) Titulaire: **Gastel, Daniel André
F-78370 Plaisir (FR)**

(72) Inventeur: **Gastel, Daniel André
F-78370 Plaisir (FR)**

(74) Mandataire: **Durand, Yves Armand Louis et al
CABINET WEINSTEIN
56 A, rue du Faubourg Saint-Honoré
75008 Paris (FR)**

(56) Documents cités:
**US-A- 4 526 641**

EP 0 667 233 B1

**Description**

La présente invention concerne un produit composite laminé pelable et son application à la fabrication de cales de réglage.

Toutes les pièces mécaniques présentent des tolérances de dimensions pour leur fabrication et leur usinage.

Une machine ou un système mécanique peut comporter des centaines ou des milliers de pièces qui présentent chacune des tolérances de dimensions propres dont la somme peut résulter en des jeux "considérables" de l'ordre de plusieurs millimètres.

Les jeux résultant de tolérances de dimensions ne sont pas admissibles et doivent être compensés pour permettre à la machine ou au système d'assurer correctement sa fonction.

On utilise à cet effet des pièces dites "cales de réglage" de forme complémentaire aux jeux considérés, qui sont insérées lors du montage dans les jeux en question, en vue de les éliminer.

Les cales de réglage adoptent souvent le contour extérieur et les percages éventuels des organes entre lesquels elles sont insérées avec une précision de calage quelquefois inférieure au micromètre, le plus souvent de l'ordre de quelques dizaines de μm.

L'opération de calage est inévitable dans les ensembles mécaniques un peu complexes et elle est prise en compte dès leur conception.

On connaît actuellemenent trois différentes techniques de calage.

Une première technique consiste à rectifier des pièces monobloc jusqu'à la dimension désirée après mesure du jeu à compenser. Cette technique présente de nombreux inconvénients, elle nécessite notamment l'utilisation d'une machine-outil pour rectifier les cales de réglage sur le site et au moment du montage, ce qui allonge la durée de montage et augmente les coûts de fabrication.

Une seconde technique consiste à empiler de fines feuilles métalliques, dites "clinquants", d'épaisseur variable que l'on interpose dans les jeux accessibles. Cette technique de calage est très imprécise car lors de l'empilage, on interpose également des résidus, de la poussière, de la graisse et/ou des copeaux, ce qui rend le résultat très aléatoire.

Une troisième technique consiste à réaliser un produit composite laminé pelable constitué d'un empilement de lamelles pelables séparées et adhérisées par une pellicule de matériau liant.

Cette dernière technique présente l'avantage de pouvoir rapidement et aisément réduire l'épaisseur des cales à la cote désirée au moment du montage, en effectuant un simple pelage d'une ou plusieurs lamelles du produit composite.

Ce produit composite laminé pelable permet donc d'assurer un calage aussi précis que les cales rectifiées, mais avec un coût nettement inférieur et sans les risques d'imprécision liés à la seconde technique.

En outre, ces cales pelables peuvent être usinées à volonté pour adopter le contour et les formes des jeux à combler.

On peut citer le document US-A-4, 526, 641 qui décrit une cale pelable non métallique constituée de lamelles de résine thermcdurcissable, par exemple des films de polyimide du type Kapton®, liées entre elles par une résine de polyester, une résine acrylique ou cyanoacrylate. L'empilement de lamelles est lié par une résine adhésive à une base en résine phénolique.

Ainsi, la base et les lamelles sont toutes constituées en un matériau du type polymère.

Il est généralement connu dans la technique, que les commandes et les transmissions de mouvements dans les machines mécaniques s'accompagnent de vibrations "parasites" et indésirables dont la fréquence de vibration peut nuire au bon fonctionnement de ces dernières.

La propagation des vibrations parasites dans les machines est un problème inhérent au fonctionnement de ces dernières et indépendant des cales de réglage.

Ne sachant pas actuellement supprimer ces vibrations parasites, on cherche à les amortir.

La présente invention a donc pour but de proposer un produit composite laminé pelable permettant d'amortir les vibrations le traversant, tout en conservant de bonnes caractéristiques mécaniques.

La présente invention a pour objet un produit composite laminé pelable comportant un empilement de lamelles pelables séparées et adhérisées par une pellicule de matériau liant, caractérisé en ce qu'il comporte en outre au moins une couche dont le matériau constitutif est différent du matériau constitutif des lamelles pelables, un desdits matériaux constitutifs étant un matériau métallique tandis que l'autre est un polymère, ladite couche étant également adhérisée à l'empilement de lamelles par une pellicule de matériau liant.

Le fait de prévoir un empilement "hétérogène" polymère/métal de lamelles pelables et d'une couche permet d'amortir et de filtrer les vibrations transmises.

Selon une caractéristique de l'invention, le matériau métallique est choisi parmi l'aluminium, l'acier, l'inox,le laiton, le titane et leurs alliages.

Selon une autre caractéristique de l'invention, le polymère est choisi entre le polytéréphtalate d'éthylène glycol et le polycarbonate.

Selon un mode de réalisation particulièrement avantageux, l'empilement du produit de l'invention est constitué de deux tranches de lamelles pelables superposées et enserrant la couche précitée.

Le matériau liant peut être formé du mélange d'une résine polymérisable, de préférence époxyde, d'un durcisseur et d'un solvant.

Selon une autre caractéristique de l'invention, la couche précitée est monobloc.

Le rapport R de l'épaisseur de la couche précitée sur l'épaisseur totale de l'empilement de lamelles pelables est de préférence inférieur à 1 :1.

La présente invention vise également l'application du produit composite laminé pelable précité à la fabrication de cales de réglage.

Il est particulièrement avantageux d'amortir les vibrations parasites au niveau des cales de réglage, car ces dernières sont généralement montées dans des zones très sensibles aux vibrations transmises, du fait que ces cales sont généralement à l'intersection de nombreuses transmissions de mouvement dans une machine considérée.

L'invention sera mieux comprise et d'autres buts, caractéristiques, détails et avantages de celle-ci apparaîtront plus clairement dans la description explicative qui va suivre de plusieurs modes de réalisation particuliers, actuellement préférés de l'invention, donnés uniquement à titre d'exemples illustratifs et non limitatifs, en référence aux dessins schématiques, annexés, dans lesquels:

La figure 1 est une vue schématique en perspective d'une éprouvette du produit composite laminé pelable de l'invention.

La figure 2 est un diagramme fréquentiel représentant l'amplitude d'un signal transmis à travers une éprouvette classique en fonction de la fréquence.

Les figures 3 et 4 sont des diagrammes fréquentiels représentant l'amplitude du signal transmis à travers l'éprouvette de l'invention en fonction de la fréquence, suivant deux épaisseurs différentes de la couche en polymère.

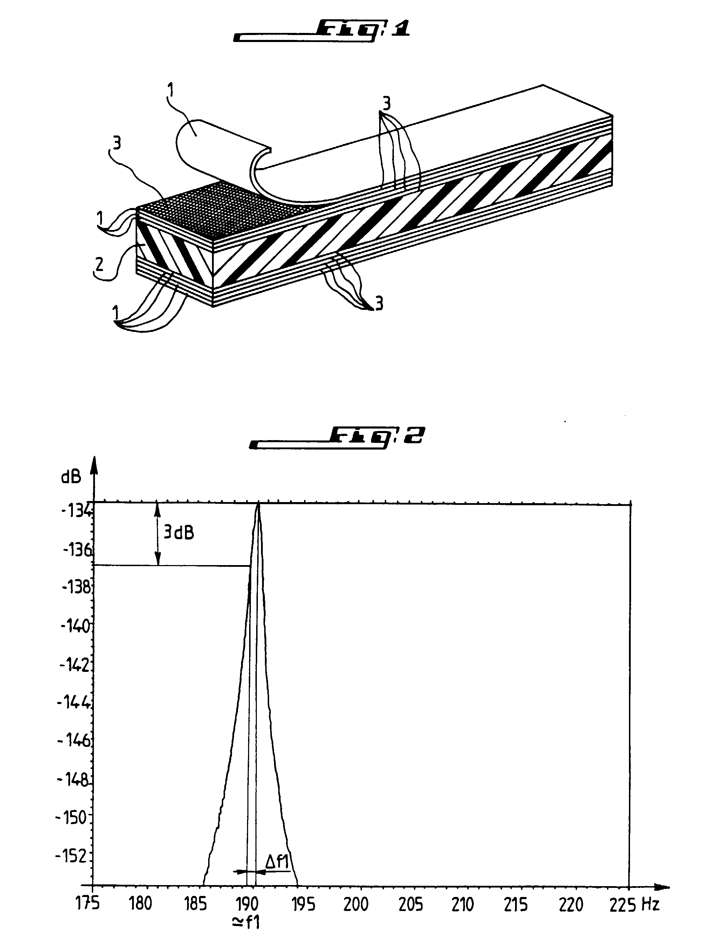

Suivant l'exemple de réalisation représenté sur la figure 1, le produit composite laminé pelable de l'invention se présente sous la forme d'une barre parallélépipèdique ou éprouvette, constituée d'un empilement de lamelles métalliques pelables 1 et d'une couche monobloc en polymère 2.

La couche 2 est intercalée entre deux piles de lamelles pelables 1.

Les lamelles pelables 1 et la couche 2 sont séparées et adhérisées par une pellicule de matériau liant 3 de très faible épaisseur.

On voit sur la figure 1 que la lamelle métallique supérieure 1 est partiellement pelée.

Bien entendu, on peut réaliser en variante un autre produit composite laminé pelable en substituant le matériau des lamelles par le matériau de la couche monobloc, c'est-à-dire en réalisant des lamelles en polymère et une couche monobloc métallique.

Dans tout ce qui va suivre, on se limitera à la description de l'exemple de réalisation illustré sur la figure 1, mais le même raisonnement est applicable à la variante de réalisation précitée.

On va maintenant décrire un procédé de fabrication du produit de l'invention.

On découpe une pluralité de feuilles très minces métalliques à partir d'un feuillard enroulé sur un tambour et enduit en surface d'un film de résine diluée extrêmement fin, d'une épaisseur de l'ordre du micromètre.

Le feuillard enduit de résine est continuement soumis à un soufflage d'air chaud pour évaporer le plus de solvant que possible.

Puis on empile ladite pluralité de feuilles métalliques en intercalant une couche de polymère d'épaisseur choisie.

La résine est utilisée en tant que matériau liant et mélangée à un durcisseur et un solvant en des proportions variables suivant l'adhérence désirée.

Par exemple, une proportion pondérale des composants du matériau liant de 70% en résine époxyde, 27% en durcisseur et 3% en solvant permet d'obtenir une adhérence extrêmement forte.

D'autre part, un mélange présentant une proportion pondérale des composants de 62,5% en résine, 25% en durcisseur et 12,5% en solvant, permet d'obtenir une adhérence moindre.

L'empilement des feuilles métalliques, de la couche de polymère et des films de résine est alors soumis à une très forte pression sous presse, et contrôlé en planéité et parallélisme pour évacuer le surplus de matériau liant.

On effectue ensuite un traitement thermique en étuve avec par exemple les étapes suivantes :

- élévation progressive de la température de l'ensemble à partir de la température ambiante jusqu'à environ 90-100°C, en une heure, approximativement,

- palier d'une heure environ à cette température pour évacuer le solvant résiduel, afin d'éviter le phénomène de bullage dû à la formation de poches de gaz entre les lamelles de métal, à la suite de la décomposition du solvant à la chaleur,

- élévation progressive de la température pendant 4 heures jusqu'à 130-200°C suivant le matériau de base,

- palier de 3 heures à cette température pour assurer la polymérisation et le durcissage de la résine époxyde, et

- retour progressif à la température ambiante par ventilation d'air froid pendant environ 5 à 10 heures.

D'une manière générale, le traitement thermique en étuve a une durée comprise entre 15 et 20 heures.

On peut alors découper et usiner dans le produit obtenu des cales de réglage de forme et de taille quelconques.

Il est particulièrement avantageux d'utiliser en tant que matériau polymère pour la couche monobloc, un polytéréphtalate bi-étiré car il est stable après traitement thermique, biodégradable, ses caractéristiques mécaniques sont comparables aux lamelles métalliques généralement utilisées et il résiste en continu à une température de 130°C.

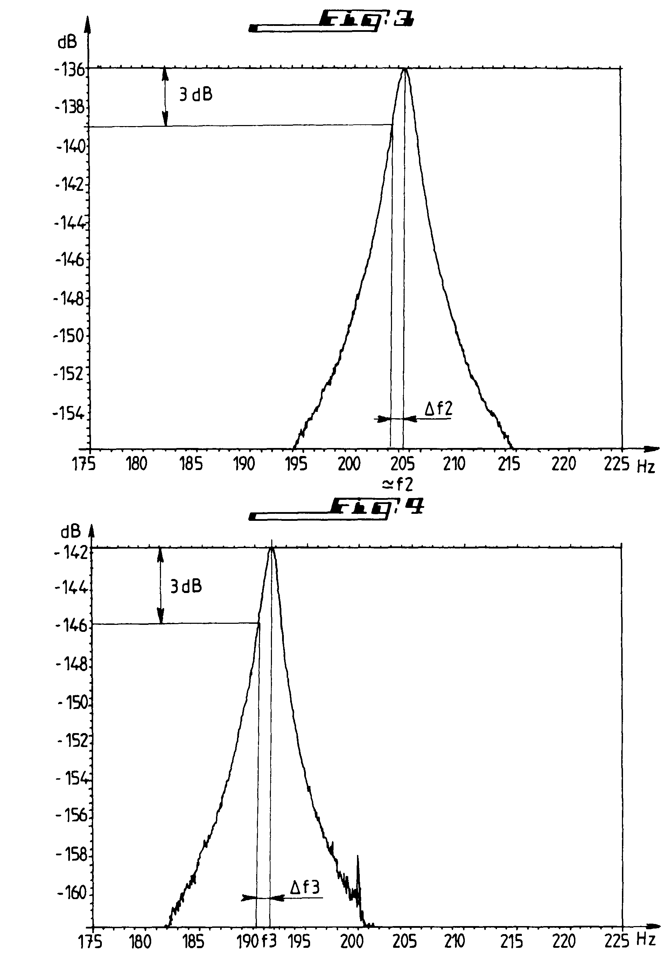

On va maintenant décrire trois exemples de produits composites laminés pelables, en référence respectivement aux figures 2 à 4, représentant une analyse fréquentielle effectuée respectivement sur une éprouvette de l'art antérieur et sur deux éprouvettes du produit de l'invention.

Exemple 1 de l'art antérieur.

L'éprouvette de cet exemple, comporte un empilement de lamelles en inox séparées et adhérisées par une pellicule de résine polymérisable, mais ne comporte pas de couche de matière polymère.

Chaque lamelle en inox présente une épaisseur de 5 centièmes de mm (50 µm) pour une épaisseur totale d'éprouvette de 2 mm. L'éprouvette comporte donc 40 lamelles en inox.

L'épaisseur totale de la résine polymérisable du matériau liant est de 2µm.

On peut donc négliger l'épaisseur de la résine par rapport à l'épaisseur des lamelles et de la couche en polymère.

On a soumis cette éprouvette à une analyse fréquentielle illustrée sur la figure 2 pour évaluer son coefficient d'amortissement vibratoire.

Cette analyse consiste à faire vibrer librement l'éprouvette encastrée à une extrémité et à enregistrer le signal vibratoire dans un analyseur de spectre.

On obtient une réponse sous forme d'un signal sinusoïdal dont l'amplitude s'amortit en raison des frottements internes du matériau.

La figure 2 représente la dispersion en fréquence du signal transmis à travers l'éprouvette après l'émission d'un signal $f_1$=190 Hertz environ.

Cette dispersion de fréquence est liée au coefficient d'amortissement vibratoire $\varepsilon$ car l'atténuation des vibrations s'accompagne d'une faible variation de fréquence autour de la fréquence d'émission.

L'amortissement vibratoire est d'autant plus grand que cette dispersion fréquentielle augmente, c'est-à-dire que la courbe illustrée sur les figures 2 à 4 s'élargit.

On détermine sur diagramme de la figure 2 le coefficient d'amortissement vibratoire $\varepsilon_1$ par la formule :

$$\varepsilon_1 = 2\Delta f_1/f_1 \approx 1/190 \approx 5.10^{-3}.$$

dans laquelle $2\Delta f_1$ est la variation de fréquence pour une amplitude atténuée du signal transmis égale à Am/$\sqrt{2}$, Am étant l'amplitude maximale à la fréquence $f_1$ et l'atténuation en amplitude correspondant en représentation logarithmique à 3 dB sous l'amplitude maximale.

On a également soumis l'éprouvette à un essai Vickers HV5 de compression et on obtient une estimation de la résistance mécanique de 440 MPa $\pm$ 20%.

Exemple 2 de l'invention.

Cette éprouvette comporte :

- une première pile de lamelles en inox, présentant chacune une épaisseur de 0,1 mm pour une épaisseur totale de 0,8 mm,

- une couche de matière polymère de 0,5 mm,

- une deuxième pile de lamelles en inox comportant huit lamelles pour une épaisseur totale de 0,8 mm.

Cette éprouvette présente donc une épaisseur totale de 2,1 mm pour une épaisseur totale de résine d'environ 1 μm.

La figure 3 représente la courbe de dispersion de fréquence pour un signal $f_2$ = 203 Hertz environ.

De manière analogue à l'exemple précédent, on détermine le coefficient d'amortissement vibratoire de cette éprouvette et on obtient un taux $\varepsilon_2 \approx 2,187/203 \approx 11.10^{-3}$ supérieur au double du taux $\varepsilon_1$ de l'exemple de l'art antérieur.

Par conséquent, l'éprouvette 2 de l'invention présente un amortissement en amplitude et en durée d'émission du signal transmis supérieur à 50% par rapport à l'éprouvette No. 1 de l'art antérieur.

On obtient également par un essai Vickers HV5 une estimation de la résistance mécanique de 510 MPa± 20%.

On obtient donc de manière surprenante des caractéristiques mécaniques meilleures pour l'éprouvette 2 de l'invention que pour l'éprouvette de l'art antérieur qui est constituée entièrement de lamelles en inox.

Exemple 3 de l'invention.

Cette éprouvette comporte :

- une première pile de lamelles en inox présentant chacune une épaisseur de 5 centièmes de millimètre pour une épaisseur totale de 0,5 mm,

- une couche polymère de 1 mm,

- une deuxième pile de lamelles métalliques comportant dix lamelles pour une épaisseur totale de 0,5 mm.

Cette éprouvette comporte donc une épaisseur totale de 2 mm, pour une épaisseur totale de résine d'environ 1 μm.

La figure 4 représente la courbe de dispersion de fréquence pour un signal $f_3$= 192 Hz environ.

De manière analogue aux exemples précédents, on obtient un coefficient d'amortissement vibratoire $\varepsilon_3 \approx 1,813/192 \approx 9.10^{-3}$.

On obtient également par un essai Vickers HV5 une estimation de la résistance mécanique de 420 MPa± 20%.

Bien entendu, la présente invention ne se limite pas aux exemples donnés dans la présente description.

Les résultats des essais d'analyse fréquentielle et de compression Vickers HV5 sont répertoriés dans le tableau comparatif ci-dessous.

Tableau comparatif

| | Eprouvette 1 de l'art antérieur | Eprouvette 2 de l'invention | Eprouvette 3 de l'invention |
|---|---|---|---|
| Coefficient d'amortissement ε | $5.10^{-3}$ | $11.10^{-3}$ | $9. 10^{-3}$ |
| Résistance mécanique par essai Vickers HV5 | 440 MPa ± 20% | 510 MPa ± 20% | 420 MPa ± 20% |

L'éprouvette No. 3 présente donc des caractéristiques d'amortissement vibratoire et de résistance mécanique inférieures à l'éprouvette No. 2 de l'invention.

L'éprouvette No. 3 amortit davantage le signal transmis que l'éprouvette 1 de l'art antérieur, mais présente des caractéristiques mécaniques inférieures.

Par conséquent, il est souhaitable que le rapport de l'épaisseur de la couche polymère sur l'épaisseur totale de l'empilement de lamelles soit inférieur à R =1:1.

On obtient des caractéristiques d'amortissement vibratoire et de résistance mécanique bien meilleures pour un rapport R=1:3, associé à l'exemple 2 de l'invention.

L'épaisseur de la couche polymère ne doit donc pas être trop importante par rapport à l'épaisseur totale du produit.

L'épaisseur des lamelles pelables peut avantageusement varier entre 25 et 100 μm.

Le produit de la présente invention peut s'appliquer notamment à l'industrie aéronautique, dans les machine-outils, dans la sidérurgie et dans le matériel ferroviaire, et dans toute industrie mécanique en général.

L'application de ce produit à la fabrication de cales de réglage permet d'atténuer la transmission des vibrations dans les machines mécaniques et également d'améliorer leur longévité de ce fait.

**Revendications**

1. Produit composite laminé pelable comportant un empilement de lamelles pelables (1) séparées et adhérisées par une pellicule de matériau liant (3), caractérisé en ce qu'il comporte en outre au moins une couche (2) dont le matériau constitutif est différent du matériau constitutif des lamelles pelables (1), un desdits matériaux constitutifs étant un matériau métallique tandis que l'autre est un polymère, ladite couche (2) étant également adhérisée à l'empilement de lamelles (1) par une pellicule du matériau liant (3).

2. Produit selon la revendication 1, caractérisé en ce que le matériau métallique est choisi parmi l'aluminium, l'acier, l'inox, le laiton,le titane et leurs alliages.

3. Produit selon la revendication 1 ou 2, caractérisé en ce que le polymère est choisi entre le polytéréphtalate d'éthylène glycol et le polycarbonate.

4. Produit selon l'une des revendications 1 à 3, caractérisé en ce que ledit empilement est constitué de deux tranches de lamelles pelables superposées (1) et enserrant la couche (2) précitée.

5. Produit selon l'une quelconque des revendications précédentes, caractérisé en ce que le matériau liant est formé du mélange d'une résine polymérisable, de préférence époxyde, d'un durcisseur et d'un solvant.

6. Produit selon l'une quelconque des revendications précédentes, caractérisé en ce que la couche précitée (2) est monobloc.

7. Produit selon l'une quelconque des revendications précédentes, caractérisé en ce que le rapport R de l'épaisseur de la couche précitée (2) sur l'épaisseur totale de l'empilement des lamelles pelables (1) est inférieur à 1 : 1.

8. Application du produit composite laminé pelable selon l'une quelconque des revendications précédentes à la fabrication de cales de réglage.

**Patentansprüche**

1. Abziehbarer Verbundstoff mit einem Stapel getrennter abziehbarer Lamellen (1), die aufgrund einer Bindungsmaterialschicht (3) aneinanderhaften, dadurch gekennzeichnet, daß dieser ausserdem mindestens eine Schicht (2) enthält, dessen Aufbaumaterial sich vom Aufbaumaterial der abziehbaren Lamellen (1) unterscheidet, wobei eines dieser Aufbaumaterialien ein metallisches Material ist und das andere ein Polymer, und die vorbesagte Schicht (2) ebenfalls am Stapel der Lamellen (1) mittels einer Bindungsmaterialschicht (3) anhaftet.

2. Verbundstoff gemäß Anspruch 1, dadurch gekennzeichnet, daß das metallische Material ausgewählt wird unter Aluminium, Stahl, rostfreiem Stahl, Messing, Titan und deren Legierungen.

3. Verbundstoff gemäß Anspruch 1 oder 2, dadurch gekennzeichnet, daß das Polymer ausgewählt wird unter Äthylenglykolpolyterephtalat und Polykarbonat.

4. Verbundstoff gemäß einem der Ansprüche 1 bis 3, dadurch gekennzeichnet, daß der besagte Stapel aus zwei Scheiben übereinander angeordneter abziehbarer Lamellen (1) besteht, die die vorbesagte Schicht (2) einschließen.

5. Verbundstoff gemäß einem der vorhergehenden Ansprüche, dadurch gekennzeichnet, daß das Bindungsmaterial aus einer Mischung polymerisierbaren Harzes, vorzugsweise eines Epoxyds, eines Härtungsmittels und eines Lösungsmittels gebildet wird.

6. Verbundstoff gemäß einem der vorhergehenden Ansprüche, dadurch gekennzeichnet, daß die vorbesagte Schicht (2) eine Einblockkonstruktion ist.

7. Verbundstoff gemäß einem der vorhergehenden Ansprüche, dadurch gekennzeichnet, daß das Verhältnis R der Dicke der vorbesagten Schicht (2) zur Gesamtdicke des Stapels der abziehbaren Lamellen (1) weniger als 1:1 beträgt.

8. Anwendung des abziehbaren Verbundstoffes gemäß einem der vorhergehenden Ansprüche zur Herstellung von Regelkeilen.

**Claims**

1. Peelable laminate product comprising a piling of peelable lamellas (1) separated and adhered by means of a film of binding material (3), characterized in that it further comprises at least one layer (2) the constitutive material of which is different from the constitutive material of the peelable lamellas (1), one of said constitutive materials being a metallic material while the other is a polymeric material, said layer (2) being also adhered to the piling of lamellas (1) by means of a film of the binding material (3).

2. Product according to claim 1, characterized in that the metallic material is chosen among aluminium, steel, stainless steel, brass, titanium and their alloys.

3. Product according to claim 1 or 2, characterized in that the polymeric material is chosen between the ethylene glycol polyterephtalate and the polycarbonate.

4. Product according to one of claims 1 to 3, characterized in that said piling is formed by two slices of peelable lamellas that are superimposed (1) and enclose said layer (2).

5. Product according to anyone of the preceding claims, characterized in that the binding material is formed by the mixture of a polymerisable resin, preferably an epoxy resin, a hardening agent and a solvent.

6. Product according to anyone of the preceding claims, characterized in that said layer (2) is of a single piece.

7. Product according to anyone of the preceding claims, characterized in that the ratio R of the thickness of said layer (2) to the total thickness of the piling of the peelable lamellas (1) is smaller than 1:1.

8. Application of the peelable laminate product according to anyone of the preceding claims to the making of adjusting shims. (7).

Fig. 1

Fig. 2

Fig. 3

Fig. 4